(19) Europäisches Patentamt
European Patent Office
Office européen des brevets

(11) **EP 2 853 303 A1**

(12) **EUROPEAN PATENT APPLICATION**
published in accordance with Art. 153(4) EPC

(43) Date of publication:
**01.04.2015 Bulletin 2015/14**

(21) Application number: **12877477.5**

(22) Date of filing: **21.05.2012**

(51) Int Cl.:
**B01D 39/20** (2006.01)  **B01D 46/00** (2006.01)
**C04B 35/565** (2006.01)  **F01N 3/022** (2006.01)

(86) International application number:
**PCT/JP2012/062947**

(87) International publication number:
**WO 2013/175552 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Ibiden Co., Ltd**
**Ogaki-shi, Gifu 503-8604 (JP)**

(72) Inventors:
• **OYA Tomokazu**
  **Ibi-gun**
  **Gifu 501-0695 (JP)**

• **OKUDA Masatoshi**
  **Ibi-gun**
  **Gifu 501-0695 (JP)**
• **SUGINO Tatsuro**
  **Ibi-gun**
  **Gifu 501-0695 (JP)**

(74) Representative: **Hoffmann Eitle**
**Patent- und Rechtsanwälte PartmbB**
**Arabellastraße 30**
**81925 München (DE)**

(54) **HONEYCOMB FILTER, EXHAUST GAS PURIFICATION DEVICE, AND EXHAUST GAS PURIFICATION METHOD**

(57) A honeycomb filter of the present invention includes a honeycomb fired body made of silicon carbide, the honeycomb fired body including a large number of cells longitudinally placed in parallel with one another with a cell wall interposed between the cells and having a peripheral wall constituting a periphery of the honeycomb fired body, either one end portion of each of the cells being sealed, the cell wall having a thickness of 0.2 mm or less, the peripheral wall having a thickness larger than the thickness of the cell wall, a silicon-containing oxide layer being formed on the surfaces of silicon carbide particles which form the honeycomb fired body, the honeycomb filter being used for capturing particulate matters in exhaust gas from a gasoline engine.

FIG.1

EP 2 853 303 A1

**Description**

TECHNICAL FIELD

The present invention relates to a honeycomb filter, an exhaust gas purifying apparatus, and a method for purifying exhaust gas.

BACKGROUND ART

In recent years, emphasis has been put on environmental issues, and engines with good fuel economy and a small environmental impact are desired in the auto industry.

Diesel engines are advantageously superior in fuel economy to gasoline engines, but generate particulate matters (hereinafter, also referred to as PMs) such as soot. Therefore, diesel engines need filters for eliminating PMs in exhaust gas.

Gasoline engines are advantageously superior in having less emission of PMs to diesel engines, and therefore, in general, do not need filters for eliminating PMs. On the other hand, gasoline engines are disadvantageously inferior in fuel economy to diesel engines.

Automobile buyers recently tend to make much of fuel economy of automobiles. Therefore, the number of automobiles equipped with a gasoline direct injection (GDI) engine excellent in fuel economy among the gasoline engines is expected to increase. However, the amount of PMs in exhaust gas from a gasoline direct injection engine is more than that in exhaust gas from a port fuel injection engine. Therefore, in order to satisfy exhaust gas regulations, a gasoline direct injection engine is expected to need a filter for capturing PMs in exhaust gas.

Patent Literatures 1 to 4 disclose, as a filter for capturing PMs in exhaust gas, honeycomb structured bodies with a thin partition.

CITATION LIST

- Patent Literature

Patent Literature 1: JP 2010-221153 A
Patent Literature 2: JP 2010-221154 A
Patent Literature 3: JP 2010-221155 A
Patent Literature 4: JP 2011-139975 A

SUMMARY OF INVENTION

- Technical Problem

A pressure loss is one of important properties of a honeycomb filter for capturing PMs in exhaust gas. Since a high pressure loss leads to a decrease in fuel economy, a low pressure loss is desirable.

In the honeycomb structured bodies disclosed in Patent Literatures 1 to 4, an increase in pressure loss is suppressed by using a thin cell wall.

However, it is difficult to secure sufficient mechanical strength in the honeycomb structured bodies disclosed in Patent Literatures 1 to 4 with a thin cell wall. Such filters may disadvantageously break due to vibration when used or handling when manufactured. In particular, since a filter is usually housed in a metal tube (metal casing) with a cushioning material (holding sealing material) interposed therebetween when mounted on automobiles or the like, the filter may break when housed.

The present invention has been made for solving the problems, and has an object to provide a honeycomb filter for a gasoline engine which is capable of suppressing an increase in pressure loss and has sufficient mechanical strength.

The present invention also has an object to provide an exhaust gas purifying apparatus provided with the honeycomb filter, and a method for purifying exhaust gas using the exhaust gas purifying apparatus.

- Solution to Problem

A honeycomb filter according to claim 1 includes a honeycomb fired body made of silicon carbide, the honeycomb fired body including a large number of cells longitudinally placed in parallel with one another with a cell wall interposed between the cells and having a peripheral wall constituting a periphery of the honeycomb fired body,

either one end portion of each of the cells being sealed,

the cell wall having a thickness of 0.2 mm or less,

the peripheral wall having a thickness larger than the thickness of the cell wall,

a silicon-containing oxide layer being formed on the surfaces of silicon carbide particles which form the honeycomb fired body,

the honeycomb filter being used for capturing particulate matters in exhaust gas from a gasoline engine.

In the honeycomb filter according to claim 1, the thin cell wall having a thickness of 0.2 mm or less can increase the aperture ratio of the honeycomb filter. As a result, an increase in pressure loss can be suppressed.

However, as described above, the honeycomb filter with a thin cell wall unfortunately has insufficient mechanical strength.

In the honeycomb filter according to claim 1, the mechanical strength in the vicinity of the peripheral portion of the honeycomb fired body can be improved by increasing the thickness of the peripheral wall to larger than the thickness of the cell wall.

Exhaust gas does not flow into the peripheral wall of the honeycomb fired body. Therefore, a peripheral wall with an increased thickness does not adversely affect the pressure loss.

Further, in the honeycomb filter according to claim 1, the mechanical strength of the inner portion of the honeycomb fired body can be improved by forming a silicon-containing oxide layer (hereinafter, also simply referred to as oxide layer) on the surfaces of silicon carbide particles that form the honeycomb fired body.

Conceivable causes for the above include the following.

There is a narrow part between the silicon carbide particles that form the honeycomb fired body. The narrow part is generated between two particles bound to each other, and is called a "neck". The silicon carbide particles are coupled to one another with a neck interposed therebetween.

When no oxide layer is formed on the surfaces of the silicon carbide particles, the coupling angle at the neck is small, and the coupling end portion of the neck is tapered. Therefore, when a honeycomb fired body constituted by such silicon carbide particles is subjected to external shock or thermal shock, the stress is concentrated at the coupling end portion of the neck.

On the other hand, when an oxide layer is formed on the surfaces of the silicon carbide particles, the coupling angle at the neck is large, and the coupling end portion of the neck becomes smooth. Therefore, the stress is less likely to be concentrated at the coupling end portion of the neck. As a result, the mechanical strength of the honeycomb fired body is presumably improved.

Further, the honeycomb filter according to claim 1 is a filter for capturing particulate matters in exhaust gas from a gasoline engine.

The temperature of the exhaust gas from a gasoline engine is higher than that of the exhaust gas from a diesel engine. In addition, in the honeycomb filter according to claim 1, the thickness of the cell wall is adjusted to not larger than 0.2 mm, and the thickness of the peripheral wall is larger than that of the cell wall. Therefore, the difference in heat capacity between the peripheral wall and the cell wall in the honeycomb fired body increases.

Therefore, when the honeycomb filter according to claim 1 is exposed to exhaust gas with high temperature from a gasoline engine, the thermal stress between the peripheral wall and the cell wall in the honeycomb fired body increases as compared to the thermal stress in the honeycomb filter for a diesel engine, and the honeycomb fired body therefore tends to be cracked. In addition, a thermal stress is likely to be most concentrated at a sintered neck portion between the silicon carbide particles which are located between the peripheral wall and the cell wall in the honeycomb fired body. However, in the honeycomb filter according to claim 1, since an oxide layer is formed on the surfaces of the silicon carbide particles, the stress is less likely to be concentrated at the sintered neck portion.

As described above, in the honeycomb filter according to claim 1, an increase in pressure loss can be suppressed and the mechanical strength against external shock or thermal shock can be increased.

In the honeycomb filter according to claim 1, problems arising from a reduction in the thickness of the cell wall to 0.2 mm or less and an increase in the thickness of the peripheral wall to larger than the thickness of the cell wall in the honeycomb filter for a gasoline engine can be solved by forming an oxide layer on the surfaces of the silicon carbide particles which form the honeycomb fired body. Accordingly, the above-described effects are not expected from each structure alone.

Further, the honeycomb filter according to claim 1 solves the problem specific to a honeycomb filter for a gasoline engine that emits exhaust gas with a temperature higher than that of exhaust gas from a diesel engine. Therefore, the above-described effects are not expected from the honeycomb filter for a diesel engine.

In the honeycomb filter with a thin cell wall, which is poor in strength, when a large amount of PMs deposited on the cell wall are burned, the cell wall cannot withstand the thermal stress, and a crack is generated in the cell wall. Accordingly, the amount of PMs that can be deposited on the thin cell wall is small. However, since the temperature of exhaust gas from a gasoline engine is higher than that of exhaust gas from a diesel engine, PMs are continuously burned. The amount of PMs from a gasoline engine is less than that from a diesel engine. Therefore, in the filter for capturing PMs from a gasoline engine, a phenomenon that a large amount of PMs burn at once does not occur. Therefore, the honeycomb filter according to claim 1 has sufficient PM capturing ability as a honeycomb filter for a gasoline engine.

In the honeycomb filter according to claim 2, the oxide layer has a thickness within the range of 200 to 400 nm.

The silicon carbide particles that form the honeycomb fired body have an average particle size within the range of about 11 $\mu$m to about 20 $\mu$m. Therefore, the oxide layer having a thickness within the range of 200 to 400 nm, which is far thinner than the silicon carbide particles, does not adversely affect the pressure loss.

An oxide layer having a thickness of smaller than 200 nm, which is too thin, cannot sufficiently provide the effect that the stress is less likely to be concentrated at the coupling end portion of the neck. In addition, it is presumed that an oxide layer having a thickness of larger than 400 nm increases the stress due to the difference in coefficient of thermal expansion between the silicon carbide particles and the oxide layer, and therefore the honeycomb fired body tends to be cracked.

In the honeycomb filter according to claim 3, the cell wall has a thickness within the range of 0.1 to 0.125 mm.

The cell wall having a thickness within the range of 0.1 to 0.125 mm allows effective suppressing of an increase in pressure loss and maintaining the mechanical strength.

A cell wall having a thickness of smaller than 0.1 mm, which is too thin, is less likely to provide sufficient mechanical strength. In addition, a cell wall having a thickness of larger than 0.125 mm is less likely to provide the effect of suppressing an increase in pressure loss.

In the honeycomb filter according to claim 4, the thickness of the peripheral wall is 150% to 300% of the thickness of the cell wall.

If the thickness of the peripheral wall is smaller than 150% of the thickness of the cell wall, the effect of improving the mechanical strength in the vicinity of the peripheral portion of the honeycomb fired body is not sufficiently provided. If the thickness of the peripheral wall is larger than 300% of the thickness of the cell wall, the mechanical strength is improved, but the aperture ratio of the honeycomb filter decreases, leading to an easy increase in pressure loss.

In the honeycomb filter according to claim 5, the peripheral wall has a thickness within the range of 0.25 to 0.4 mm.

If the thickness of the peripheral wall is smaller than 0.25 mm, the effect of improving the mechanical strength in the vicinity of the peripheral portion of the honeycomb fired body is not sufficiently provided. If the thickness of the peripheral wall is larger than 0.4 mm, the mechanical strength is improved, but the aperture ratio of the honeycomb filter decreases, leading to an easy increase in pressure loss.

In the honeycomb filter according to claim 6 further contains a catalyst supported on the cell wall of the honeycomb fired body.

The honeycomb fired body with a catalyst deposited on the cell wall enables elimination of toxic components such as CO, HC, and NOx to purify exhaust gas.

In the honeycomb filter according to claim 7, the gasoline engine is a gasoline direct injection engine.

The honeycomb filter according to claim 8 includes a single piece of the honeycomb fired body. The honeycomb filter according to claim 9 includes a plurality of the honeycomb fired bodies combined with an adhesive layer interposed therebetween.

An exhaust gas purifying apparatus according to claim 10 includes a metal casing provided with a gas inlet side and a gas outlet side;

a honeycomb filter housed in the metal casing; and

a holding sealing material wound around the honeycomb filter and disposed between the metal casing and the honeycomb filter,

the honeycomb filter being a honeycomb filter of the present invention.

A method for purifying exhaust gas according to claim 11 includes purifying exhaust gas from a gasoline engine using an exhaust gas purifying apparatus,

the exhaust gas purifying apparatus including:

> a metal casing provided with a gas inlet side and a gas outlet side;
> a honeycomb filter housed in the metal casing; and
> a holding sealing material wound around the honeycomb filter and disposed between the metal casing and the honeycomb filter,
> the honeycomb filter being a honeycomb filter of the present invention,
> the exhaust gas from a gasoline engine being flowed into the exhaust gas purifying apparatus from the gas inlet side of the metal casing and discharged from the gas outlet side of the metal casing.

As described above, the honeycomb filter of the present invention has a low pressure loss and excellent mechanical strength.

Therefore, in the exhaust gas purifying apparatus according to claim 10 and the method for purifying exhaust gas according to claim 11, the exhaust gas from a gasoline engine, particularly from a gasoline direct injection engine, can preferably be purified.

BRIEF DESCRIPTION OF DRAWINGS

Fig. 1 is a perspective view schematically illustrating one example of a honeycomb filter of the first embodiment of the present invention.
Fig. 2(a) is a perspective view schematically illustrating one example of a honeycomb fired body that constitutes the honeycomb filter illustrated in Fig. 1. Fig. 2(b) is an A-A line cross-sectional view of the honeycomb fired body illustrated in Fig. 2(a).
Fig. 3(a) is an explanatory view schematically illustrating a state in which silicon carbide particles forming the honeycomb fired body are bound to one another. Fig. 3(b) is a partially enlarged view of the silicon carbide particles illustrated in Fig. 3(a).
Fig. 4 is a cross-sectional view schematically illustrating one example of an exhaust gas purifying apparatus of the first embodiment of the present invention.
Fig. 5 is an explanatory view schematically illustrating a method of the three-point bending test.
Fig. 6(a) is a perspective view schematically illustrating one example of a honeycomb filter of another embodiment of the present invention. Fig. 6(b) is a B-B line cross-sectional view of the honeycomb filter illustrated in Fig. 6(a).

DESCRIPTION OF EMBODIMENTS

Hereinafter, specific description is given on embodiments of the present invention. However, the present invention is not limited to these embodiments, and these embodiments may be changed without departing from the present invention.

(First embodiment)

The following description will discuss a first embodiment, which is one embodiment of the honeycomb filter, the exhaust gas purifying apparatus, and the method for purifying exhaust gas of the present invention.
The honeycomb filter of a first embodiment of the present invention will be described.

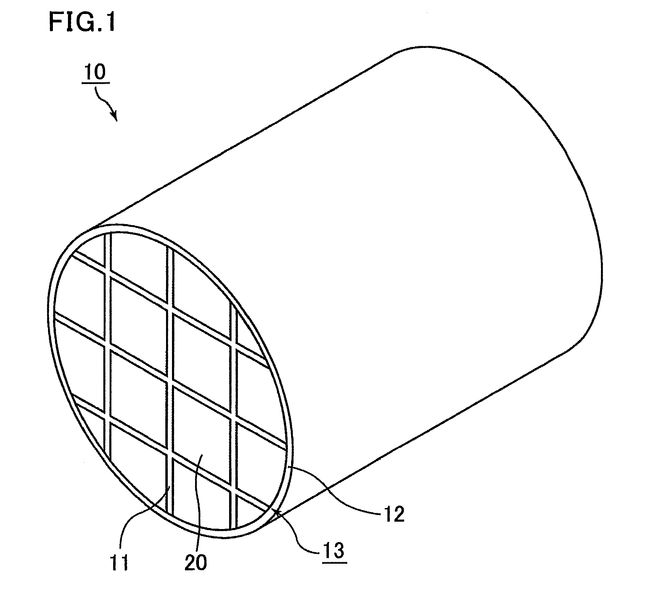

Fig. 1 is a perspective view schematically illustrating one example of a honeycomb filter of the first embodiment of the present invention.

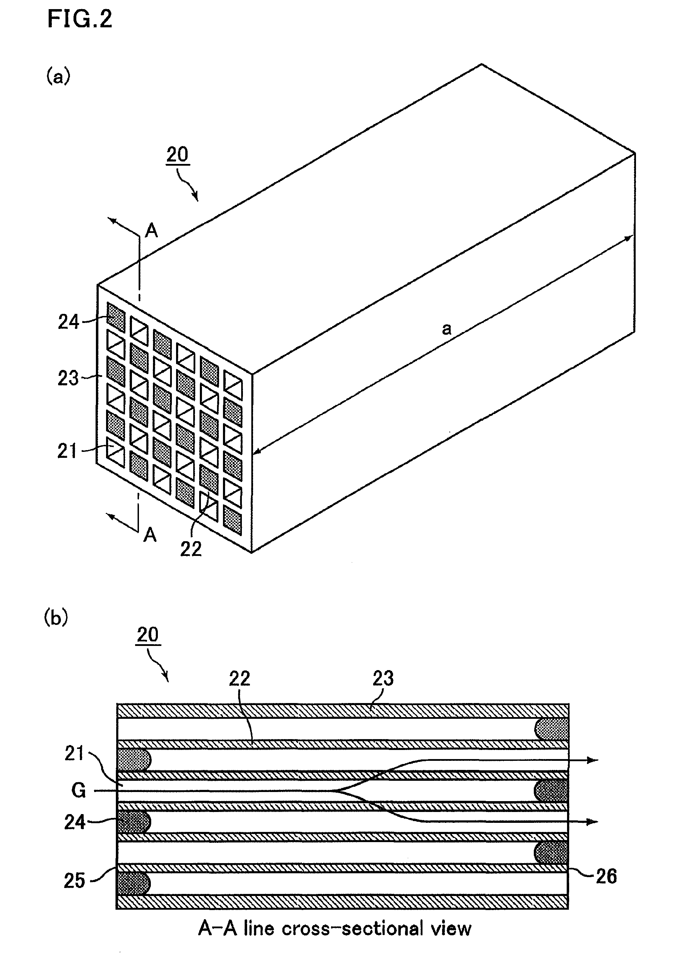

Fig. 2(a) is a perspective view schematically illustrating one example of a honeycomb fired body that constitutes the honeycomb filter illustrated in Fig. 1. Fig. 2(b) is an A-A line cross-sectional view of the honeycomb fired body illustrated in Fig. 2(a).
In a honeycomb filter 10 illustrated in Fig. 1, a plurality of honeycomb fired bodies 20 made of silicon carbide are combined with an adhesive layer 11 interposed therebetween to form a ceramic block 13. A peripheral coat layer 12 is formed on the periphery of the ceramic block 13 to prevent leakage of exhaust gas. The peripheral coat layer may be formed, if needed.
Such a honeycomb filter formed by combining a plurality of the honeycomb fired bodies is also referred to as an aggregated honeycomb filter.
Each of the honeycomb fired bodies 20 has a shape illustrated in Figs. 2(a) and 2(b).
In the honeycomb fired body 20 illustrated in Figs. 2(a) and 2(b), a large number of cells 21 are longitudinally (direction of the arrow a in Fig. 2(a)) placed in parallel with one another with a cell wall 22 interposed therebetween. A peripheral wall 23 constitutes a periphery of the honeycomb fired body. The thickness of the peripheral wall 23 is larger than that of the cell wall 22.
In the honeycomb fired body 20 illustrated in Fig. 2(a) and 2(b), either one end portion of each of the cells 21 is sealed with a plug 24.
Therefore, exhaust gas G (in Fig. 2(b), exhaust gas is indicated by G, and a flow thereof is indicated by arrows) which has flowed into the cells 21, each of which has an opening on one end face 25, surely passes through the cell wall 22 that partitions the cells 21, and flows out from the cells 21, each of which has an opening on the other end face 26. Thus, the cell wall 22 functions as a filter for capturing PMs and the like.
Here, among the faces of the honeycomb fired body and honeycomb filter, faces at which the cells are open are termed end faces, and faces other than the ends faces are termed side faces.
The honeycomb filter of the first embodiment of the present invention is a filter for capturing particulate matters in exhaust gas from a gasoline engine.

The gasoline engine is preferably a gasoline direct injection engine.

In this description, the honeycomb fired body made of silicon carbide means a honeycomb fired body containing 60% by weight or more of silicon carbide.

The honeycomb fired bodies that constitute the honeycomb filter of the first embodiment of the present invention are each formed by a large number of silicon carbide particles serving as aggregates which are bound to one another with a large number of fine pores kept therebetween.

The honeycomb fired bodies that constitute the honeycomb filter of the first embodiment of the present invention may contain components other than silicon carbide, provided that the honeycomb fired bodies contain 60% by weight or more of silicon carbide. For example, the honeycomb fired bodies may contain 40% by weight or less of silicon. The main component of the materials for forming the honeycomb fired bodies may be silicon-containing silicon carbide that is silicon carbide blended with metal silicon or may be silicon carbide bound with silicon or a silicate compound. In cases where the honeycomb fired bodies contain silicon such as metal silicon, an oxide layer is also formed on the surface of the silicon.

In particular, the honeycomb fired bodies preferably contain 98% by weight or more of silicon carbide or 98% by weight or more of a combination of silicon carbide and metal silicon.

In the honeycomb filter of the first embodiment of the present invention, the thickness of the cell wall of the honeycomb fired bodies is 0.2 mm or smaller, preferably within the range of 0.1 to 0.2 mm, and more preferably within the range of 0.1 to 0.125 mm.

A cell wall having a thickness of larger than 0.2 mm may cause an increase in pressure loss. A cell wall having a thickness of smaller than 0.1 mm, which is too thin, is less likely to provide sufficient mechanical strength.

The cell wall having a thickness within the range of 0.1 to 0.125 mm effectively suppresses an increase in pressure loss and maintains the mechanical strength.

In the honeycomb filter of the first embodiment of the present invention, the thickness of the peripheral wall is larger than that of the cell wall in the honeycomb fired bodies.

Specifically, the thickness of the peripheral wall is preferably 150% to 300% of the thickness of the cell wall, and more preferably 200% to 300% of the thickness thereof.

If the thickness of the peripheral wall is smaller than 150% of the thickness of the cell wall, the effect of improving the mechanical strength in the vicinities of the peripheral portions of the honeycomb fired bodies is not sufficiently provided. If the thickness of the peripheral wall is larger than 300% of the thickness of the cell wall, the mechanical strength is improved, but the aperture ratio of the honeycomb filter decreases, leading to an easy increase in pressure loss.

Further, in the honeycomb filter of the first embodiment of the present invention, the thickness of the peripheral walls of the honeycomb fired bodies is not particularly limited, and is preferably within the range of 0.25 to 0.4 mm, and more preferably within the range of 0.25 to 0.3 mm.

If the thickness of the peripheral walls is smaller than 0.25 mm, the effect of improving the mechanical strength in the vicinities of the peripheral portions of the honeycomb fired bodies is not sufficiently provided. If the thickness of the peripheral walls is larger than 0.4 mm, the mechanical strength is improved, but the aperture ratio of the honeycomb filter decreases, leading to an easy increase in pressure loss.

In this description, the cell wall of the honeycomb fired bodies means a portion that exists between two cells adjacent to each other and separates the two cells, and the peripheral wall of the honeycomb fired bodies means a portion that exists on the periphery of the honeycomb fired body and constitutes the periphery of the honeycomb fired body.

In the honeycomb filter of the first embodiment of the present invention, a silica-containing oxide layer (silica film) is formed on the surfaces of the silicon carbide particles that form the honeycomb fired body.

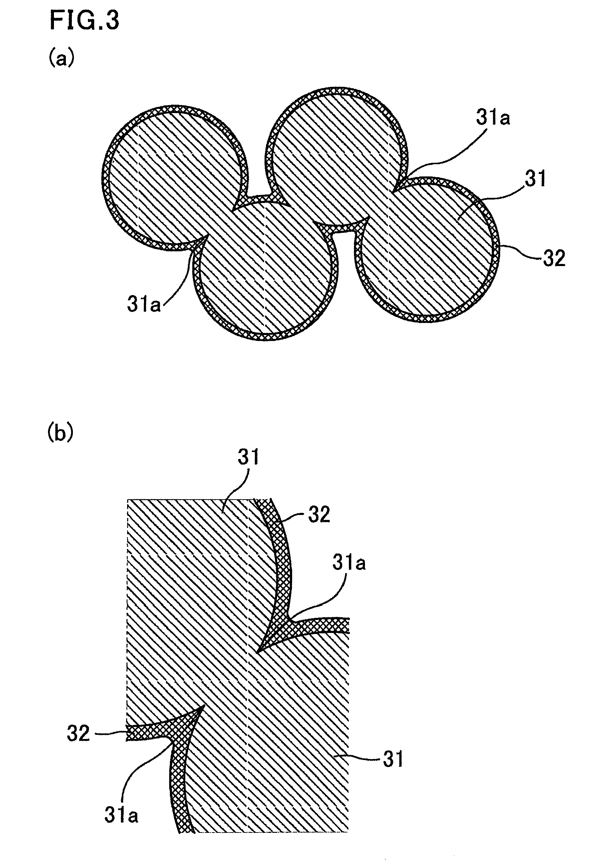

Fig. 3(a) is an explanatory view schematically illustrating a state in which the silicon carbide particles forming the honeycomb fired body are bound to one another. Fig. 3(b) is a partially enlarged view of the silicon carbide particles illustrated in Fig. 3(a).

As illustrated in Figs. 3(a) and 3(b), silicon carbide particles 31 that form the honeycomb fired body are bound to one another via a neck 31a therebetween. On the surfaces of the silicon carbide particles 31, a silica-containing oxide layer 32 is formed.

When the oxide layer 32 is formed on the surfaces of the silicon carbide particles 31, the coupling angle of the neck 31a becomes large, and the coupling end portion of the neck 31a becomes smooth. Therefore, the stress is less likely to be concentrated at the coupling end portion of the neck 31a. As a result, the mechanical strength of the honeycomb fired body is presumably improved.

The thickness of the oxide layer is not particularly limited, and is preferably within the range of 200 to 400 nm, and more preferably within the range of 250 to 320 nm.

The silicon carbide particles that form the honeycomb fired body have an average particle size within the range of about 11 $\mu$m to about 20 $\mu$m. Therefore, the oxide layer having a thickness within the range of 200 to 400 nm, which is far thinner than the silicon carbide particles, does not adversely affect the pressure loss.

An oxide layer having a thickness of smaller than 200 nm, which is too thin, cannot sufficiently provide the effect that the stress is less likely to be concentrated at the coupling end portion of the neck. In addition, it is presumed that an oxide layer having a thickness of larger than 400 nm increases the stress due to the difference in coefficient of thermal expansion between the silicon carbide particles and the oxide layer, and therefore the honeycomb fired body tends to be cracked.

The thickness of the oxide layer can be measured by X-ray photoelectron spectroscopy (XPS). The XPS is an analysis method in which photoelectron energy generated by irradiation of a sample surface with X rays is measured using a device named energy analyzer. The XPS enables analysis of the constituent elements of the sample and its electronic state. In addition, alternate performance of the X-ray photoelectron spectroscopy and ion sputtering clarifies change in the composition of the sample in the depth direction (thickness direction).

In the honeycomb filter of the first embodiment of the present invention, the depth (thickness) of the oxide layer can be determined by filing the sample surface at a constant rate by the ion sputtering and analyzing the composition thereof by the XPS. The oxide layer having a thickness within the range of 200 to 400 nm, which is determined based on the results determined through these measuring methods, is preferably formed on the surfaces of the silicon carbide particles.

In this description, the thickness of the oxide layer means the thickness of the oxide layer prior to the use of the honeycomb filter mounted on an automobile and the like.

In the honeycomb filter of the first embodiment of the present invention, the weight increase rate is preferably within the range of 1.5% to 3.0% by weight. In this case, the thickness of the oxide layer is controlled to a constant value.

The weight increase rate corresponds to the weight increase rate obtainable by measuring the weights of the honeycomb fired body or the honeycomb filter before and after formation of the oxide layer.

In the honeycomb filter of the first embodiment of the present invention, the oxide layer is formed on the surfaces of the silicon carbide particles. Therefore, the wettability of catalysts or the like is favorable.

For example, the time it takes to change the contact angle between the oxide layer and a pendant droplet thereon from 40° to 20° (hereinafter, referred to as a contact angle change time) is measured by the pendant drop method using a contact angle meter (produced by Kyowa Interface Science Co., Ltd., Drop Master 300, counting system: CCD camera). In the honeycomb filter of the first embodiment of the present invention, the contact angle change time is within the range of 14 to 18 seconds.

The shorter contact angle change time indicates better wettability of catalysts or the like, and catalysts or the like are therefore presumably easily supported on the honeycomb fired body.

A surfactant (produced by SAN NOPCO LIMITED, SN980, viscosity: 3700 cP, surface tension: 30.6 mN/m) is used as the pendant droplet.

When no oxide layer is formed on the surfaces of the silicon carbide particles, the contact angle change time is within the range of about 20 seconds to about 22 seconds.

A description is given on a method for manufacturing the honeycomb filter of the first embodiment of the present invention.

Hereinafter, a description is given on the method for manufacturing the honeycomb filter having the honeycomb fired bodies illustrated in Figs. 2(a) and 2(b) in the order of procedures.

First, a molding process is performed in which a ceramic raw material is molded to give a honeycomb molded body having a large number of cells longitudinally placed in parallel with one another with a cell wall interposed therebetween.

More specifically, silicon carbide powders having different average particle sizes as ceramic powder, an organic binder, a fluid plasticizer, a lubricant, and water are first mixed to give a ceramic raw material (wet mixture) for manufacturing a honeycomb molded body.

Next, the wet mixture is charged into an extrusion molding machine. By extrusion-molding the wet mixture, a honeycomb molded body in a desired shape is manufactured.

Then, the honeycomb molded body is cut to a predetermined length, and a drying process is performed using a dryer such as a microwave dryer, a hot-air dryer, a dielectric dryer, a reduced-pressure dryer, a vacuum dryer, and a freeze dryer.

Then, a sealing process is performed in which predetermined end portions of the cells are filled with a plug material paste serving as plugs to seal the cells.

The plug material paste can be manufactured, for example, by mixing silicon carbide powder, a binder, a solvent, a dispersant, and a lubricant. In addition, the ceramic raw material (wet mixture) may be used as the plug material paste.

Then, a degreasing process is performed in which an organic matter in the honeycomb molded body is heated in a degreasing furnace.

In the degreasing process, the honeycomb molded body is heated at a temperature ranging from 300°C to 650°C in an oxygen-containing atmosphere.

Subsequently, the degreased honeycomb molded body is transferred to a firing furnace where a firing process is performed, and the honeycomb molded body is heated at a temperature ranging from 2000°C to 2200°C in a non-oxidative atmosphere, and thereby silicon carbide particles in the honeycomb molded body are sintered. In such a firing process, a honeycomb fired body as illustrated in Figs. 2(a) and 2(b) is manufactured.

Here, the plug material paste filled in the end portions of the cells is fired by heating to be plugs.

Conditions conventionally used in manufacturing honeycomb fired bodies can be applied to conditions for the above cutting, drying, sealing, degreasing, and firing processes.

An oxidation process is performed in which the honeycomb fired body is oxidized by heating in an oxidative atmosphere at a temperature ranging from 1200°C to 1400°C for 0.5 to 35 hours.

In the oxidation process, an oxide layer can be formed on the surfaces of the silicon carbide particles that form the honeycomb fired body.

The oxidation process is performed under an oxygen-containing atmosphere and preferably performed under an ambient atmosphere from the standpoint of cost efficiency.

The oxygen concentration (content as oxygen) in the oxidative atmosphere is not particularly limited, and is preferably within the range of 5% to 21% by volume. From the standpoint of cost efficiency, air is preferably used.

If the oxygen concentration in the oxidative atmosphere is lower than 5% by volume, oxidation of the surfaces of the silicon carbide particles in the honeycomb fired body is unstable, and formation of an oxide layer having a desired thickness is difficult. Further, if the oxygen concentration in the oxidative atmosphere is lower than 5% by volume, a heat treatment is required to be performed for a long period of time, and the manufacturing efficiency tends to be lowered. If the oxygen concentration in the oxidative atmosphere is higher than 21% by volume, an additional process is needed for generating the oxidative atmosphere, such as preparation of gaseous oxygen, which tends to lead a decrease in production efficiency.

The heat treatment temperature in the oxidation process is preferably within the range of 1200°C to 1400°C.

If the heat treatment temperature is lower than 1200°C, it is difficult to form an oxide layer haivng a desired thickness. In addition, the heat treatment is required to be performed for a long period of time in order to form an oxide layer having a target thickness. If the heat treatment temperature is higher than 1400°C, it is difficult to control the thickness of the oxide layer.

The heat treatment time in the oxidation process is preferably 0.5 to 35 hours, and is appropriately determined in accordance with the heat treatment temperature and the target thickness of the oxide layer.

Specifically, if the heat treatment temperature is 1200°C or higher and lower than 1300°C, the heat treatment time is preferably 5 to 35 hours. If the heat treatment temperature is 1300°C or higher and lower than 1400°C, the heat treatment time is preferably 0.5 to 5 hours.

If the heat treatment time is shorter than the lower limit, it is difficult to form an oxide layer having a target thickness. If the heat treatment time is longer than the upper limit, a formed oxide layer may be thicker than a target thickness.

In this description, the heat treatment time means a time period during which the temperature is maintained at a target heat treatment temperature after being raised to that temperature. Accordingly, the time for heating the honeycomb fired body during the entire oxidation process includes a time required for temperature rise and temperature fall in addition to the heat treatment time.

Through the oxidation process performed under the above conditions, an oxide layer having a desired thickness (preferably a thickness within the range of 200 to 400 nm) can be formed on the surfaces of the silicon carbide particles that form the honeycomb fired body.

Next, a bonding process is performed in which a plurality of the honeycomb fired bodies are bonded to each other with an adhesive layer interposed therebetween to prepare a ceramic block. Hereinafter, an exemplary bonding process is described.

First, an adhesive paste is applied to the predetermined side faces of each honeycomb fired body to form an adhesive paste layer. On the adhesive paste layer, another honeycomb fired body is stacked, and this procedure is repeated. In this manner, an aggregate of the honeycomb fired bodies is manufactured which includes the honeycomb fired bodies with an adhesive paste applied to the side faces.

Subsequently, the aggregate of the honeycomb fired bodies is heated using a dryer or the like so that the adhesive paste is dried and solidified. In this manner, a ceramic block in which a plurality of the honeycomb fired bodies are bonded to one another with an adhesive layer interposed therebetween is manufactured.

The adhesive paste used may contain, for example, an inorganic binder, an organic binder, and inorganic particles. The adhesive paste may further contain at least one of inorganic fibers and whisker.

Then, a periphery cutting process is performed in which the ceramic block is subjected to a cutting process.

Specifically, the cutting process is performed on the ceramic block using a diamond cutter to manufacture a ceramic block having the periphery formed into a round pillar shape.

A peripheral coat layer forming process is performed in which a peripheral coating material paste is applied to the periphery of the round pillar-shaped ceramic block, and dried, and solidified to form a peripheral coat layer.

As the peripheral coating material paste, the adhesive paste may be used.

Here, a paste having a composition different from that of the above adhesive paste may be used as the peripheral coating material paste.

The peripheral coat layer is not always formed, and may be formed if needed.

In this manner, the honeycomb filter of the first embodiment of the present invention can be manufactured.

In the above method for manufacturing the honeycomb filter, the oxidation process is performed after the honeycomb fired body is manufactured (that is, between the firing process and the bonding process).

However, in the method for manufacturing the honeycomb filter of the first embodiment of the present invention, the oxidation process may be performed between the bonding process and the periphery cutting process, between the periphery cutting process and the peripheral coat layer forming process, or after the peripheral coat layer forming process. Further, a ceramic block in which no peripheral coat layer is formed may be subjected to the oxidation process.

The following will mention the exhaust gas purifying apparatus of the first embodiment of the present invention.

The exhaust gas purifying apparatus of the first embodiment of the present invention includes the above-mentioned honeycomb filter of the first embodiment of the present invention.

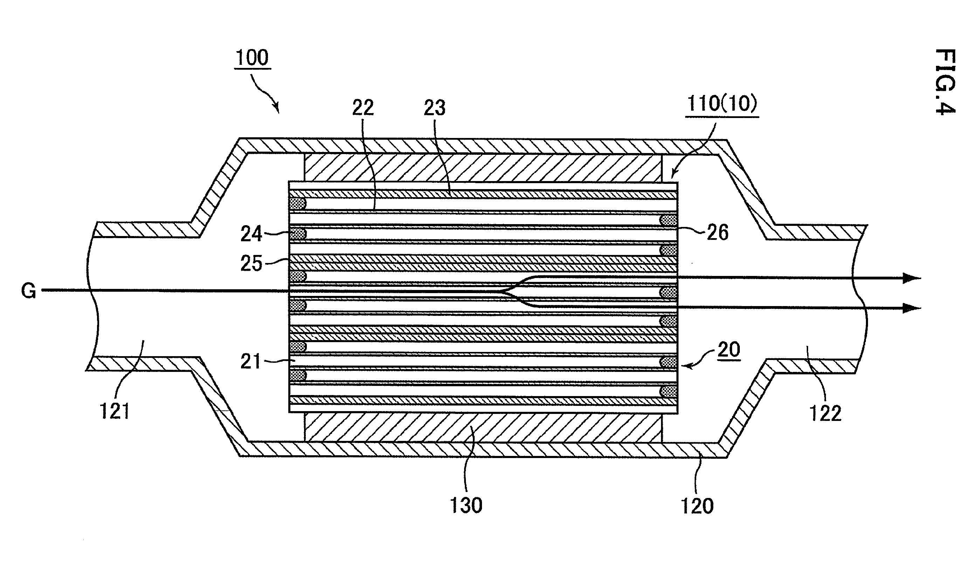

Fig. 4 is a cross-sectional view schematically illustrating one example of an exhaust gas purifying apparatus of the first embodiment of the present invention.

An exhaust gas purifying apparatus 100 illustrated in Fig. 4 includes: a metal casing 120 provided with a gas inlet side 121 and a gas outlet side 122; and a honeycomb filter 110 housed in the metal casing 120.

In the exhaust gas purifying apparatus 100 illustrated in Fig. 4, the honeycomb filter 10 illustrated in Fig. 1 is used as the honeycomb filter 110.

As illustrated in Figs. 2(a) and 2(b), either one end portion of each of the cells 21 of the honeycomb fired body 20 that constitutes the honeycomb filter 10 is sealed with a plug 24.

A holding sealing material 130 is provided between the honeycomb filter 110 and the metal casing 120. The holding sealing material 130 holds the honeycomb filter 110.

The holding sealing material 130 is wound around the honeycomb filter 110.

The holding sealing material is a mat-like member having a substantially quadrangular shape in a plan view and mainly including inorganic fibers such as alumina.

An introducing pipe is coupled to the gas inlet side 121 of the metal casing 120. The introducing pipe is configured to introduce exhaust gas from internal combustion engines, such as a gasoline engine (preferably a direct injection gasoline engine), into the exhaust gas purifying apparatus 100. An exhaust pipe configured to discharge exhaust gas that has passed through the exhaust gas purifying apparatus 100 is connected to the gas outlet side 122 of the metal casing 120.

The method for purifying exhaust gas of the first embodiment of the present invention using the exhaust gas purifying apparatus 100 provided with the honeycomb filter 110 (honeycomb filter 10) will be described with reference to Fig. 4.

As illustrated in Fig. 4, exhaust gas (in Fig. 4, exhaust gas is indicated by G, and the flow of the exhaust gas is indicated by arrows) from the internal combustion engine flows into the exhaust gas purifying apparatus 100 from the gas inlet side 121 of the metal casing 120. Then, the exhaust gas G flows into the honeycomb filter 110 from the one end face 25 of the honeycomb fired body 20. Specifically, the exhaust gas G flows into the cells 21, each of which has an opening on the one end face 25, of the honeycomb fired body 20.

Then, the exhaust gas G passes through the cell wall 22 that partitions the cells 21. In this case, PMs in the exhaust gas G are captured by the cell wall 22, and thereby the exhaust gas G is purified.

The purified exhaust gas G flows into the cells 21, each of which has an opening on the other end face 26, of the honeycomb fired body 20, and is discharged outside of the honeycomb filter 110. Then, the exhaust gas G is discharged outside of the exhaust gas purifying apparatus 100 from the gas outlet side 122 of the metal casing 120.

The method for purifying exhaust gas of the first embodiment of the present invention is capable of purifying the exhaust gas from a gasoline engine. In particular, exhaust gas from a gasoline direct injection engine is preferably purified.

That is, the exhaust gas purifying apparatus of the first embodiment of the present invention is suitably used as a gasoline particulate filter (GPF).

In the exhaust gas purifying apparatus of the first embodiment of the present invention, the honeycomb filter of the first embodiment of the present invention may be housed singly in the metal casing, or may be housed therein together with the honeycomb structured body used as another catalyst carrier.

The method for manufacturing the exhaust gas purifying apparatus of the first embodiment of the present invention will be described below.

The honeycomb filter of the first embodiment of the present invention, manufactured by the above-mentioned method, is disposed inside the metal casing. Specifically, a mat having a substantially quadrangular shape in a plan view and mainly comprising inorganic fibers is prepared as a holding sealing material. The mat is wound around the honeycomb filter. Then, the honeycomb filter with the mat wound therearound is press-fit in a substantially cylindrical metal casing. Thus, the exhaust gas purifying apparatus is formed.

Alternatively, a metal casing separable into two parts, a first metal casing and a second metal casing, is prepared, the honeycomb filter around which a mat including inorganic fibers has been wound is placed on the first metal casing, and the second metal casing is placed on the honeycomb filter, and the casings are sealed to provide the exhaust gas purifying apparatus.

Hereinafter, the effects of the honeycomb filter, the exhaust gas purifying apparatus, and the method for purifying exhaust gas of the present embodiment will be mentioned.

(1) In the honeycomb filter of the present embodiment, the thin cell wall having a thickness of 0.2 mm or less can increase the aperture ratio of the honeycomb filter. As a result, an increase in pressure loss can be suppressed.

(2) In the honeycomb filter of the present embodiment, the mechanical strength in the vicinity of the peripheral portion of the honeycomb fired body can be improved by increasing the thickness of the peripheral wall to larger than the thickness of the cell wall.

Exhaust gas does not flow into the peripheral wall of the honeycomb fired body. Therefore, the peripheral wall having an increased thickness does not adversely affect the pressure loss.

(3) In the honeycomb filter of the present embodiment, the mechanical strength of the inner portion of the honeycomb fired body can be improved by forming a silicon-containing oxide layer on the surfaces of silicon carbide particles that form the honeycomb fired body.

When the oxide layer is formed on the surfaces of the silicon carbide particles, the coupling angle at a neck is large and the coupling end portion of the neck becomes smooth. Therefore, the stress is less likely to be concentrated at the coupling end portion of the neck is. As a result, the mechanical strength of the honeycomb fired body is presumably improved.

(4) The honeycomb filter of the present embodiment is a filter for capturing particulate matters in exhaust gas from a gasoline engine.

The temperature of the exhaust gas from a gasoline engine is higher than that of the exhaust gas from a diesel engine. In addition, in the honeycomb filter of the present embodiment, the thickness of the cell wall is adjusted to not larger than 0.2 mm and the thickness of the peripheral wall is larger than that of the cell wall. Therefore, the difference in heat capacity between the peripheral wall and the cell wall in the honeycomb fired body increases.

Therefore, when the honeycomb filter of the present embodiment is exposed to exhaust gas with high temperature from a gasoline engine, the thermal stress between the peripheral wall and the cell wall in the honeycomb fired body in the honeycomb filter of the present embodiment increases as compared to the thermal stress in the honeycomb filter for a diesel engine, and the honeycomb fired body tends to be cracked.

However, in the honeycomb filter of the present embodiment, since an oxide layer is formed on the surfaces of the silicon carbide particles, the stress is less likely to be concentrated at a sintered neck portion at which a thermal stress is likely to be most concentrated between the silicon carbide particles located between the peripheral wall and the cell wall in the honeycomb fired body. In addition, a thermal stress is likely to be most concentrated at a sintered neck portion between the silicon carbide particles which are located between the peripheral wall and the cell wall in the honeycomb fired body. However, in the honeycomb filter of the present embodiment, since an oxide layer is formed on the surfaces of the silicon carbide particles, the stress is less likely to be concentrated at the sintered neck portion.

(5) As described above, in the honeycomb filter of the present embodiment, an increase in pressure loss is suppressed, and the mechanical strength against external shock or thermal shock can be improved.

Further, the honeycomb filter of the present embodiment has sufficient PM capturing ability as a honeycomb filter for a gasoline engine.

(6) As described above, the honeycomb filter of the present embodiment has a low pressure loss and excellent mechanical strength.

Therefore, the exhaust gas purifying apparatus of the present embodiment and the method for purifying exhaust gas of the present embodiment preferably enable purification of exhaust gas from a gasoline engine, particularly from a gasoline direct injection engine.

EXAMPLE

The following illustrates examples that more specifically disclose the first embodiment of the present invention. The present invention is not limited to these examples.

(Example 1)

(1) Manufacture of honeycomb fired body

Coarse powder (52.8% by weight) of silicon carbide having an average particle size of 22 $\mu$m and fine powder (22.6% by weight) of silicon carbide having an average particle size of 0.5 $\mu$m were mixed. To the resulting mixture were added an acrylic resin (2.1% by weight), an organic binder (methyl cellulose) (4.6% by weight), a lubricant (2.8% by weight) (UNILUB, produced by NOF Corporation), glycerin (1.3% by weight), and water (13.8% by weight). Then, the mixture was kneaded to prepare a wet mixture. The obtained wet mixture was extrusion-molded, and an extrusion-molded body was cut to manufacture a raw honeycomb molded body having the same shape as that illustrated in Figs. 2(a) and 2(b) and having cells not sealed.

Next, the raw honeycomb molded body was dried using a microwave dryer.

Predetermined cells of the dried honeycomb molded body were charged with a plug material paste, and the honeycomb molded body was dried again using a dryer.

The plug material paste was prepared by mixing coarse powder (63.3% by weight) of silicon carbide having an average particle size of 11 $\mu$m, fine powder (15.8% by weight) of silicon carbide having an average particle size of 0.65 $\mu$m, a solvent (diethylene glycol mono-2-ethylhexyl ether) (11.1% by weight), a binder (a mixture of a methacrylic acid ester copolymer and diethylene glycol mono-2-ethylhexyl ether) (4.7% by weight), a dispersant (PLYSURF produced by DAI-ICHI KOGYO SEIYAKU CO., LTD.) (1.6% by weight), and a lubricant (UNILUB 50MB-26 produced by NOF CORPORATION) (3.4% by weight).

The dried honeycomb molded body was degreased at 400°C, and then fired at 2200°C in a normal-pressure argon atmosphere for three hours so that a honeycomb fired body made of a silicon carbide sintered body was manufactured.

The honeycomb fired body had a porosity of 45%, an average pore size of 15 $\mu$m, measurements of 34.3 mm x 34.3 mm $\times$ 150 mm, the number of cells (density of cells) of 46.5 pcs/cm$^2$ (300 pcs/inch$^2$), a thickness of each cell wall of 0.10 mm (4 mil), and a thickness of the peripheral wall of 0.30 mm (12 mil).

The resulting honeycomb fired body was subjected to an oxidation process as follows.

An oxidation process was performed in which the honeycomb fired body was heated under an ambient atmosphere. The temperature was raised from room temperature to 1370°C at a rate of 300°C/hour. The honeycomb fired body was allowed to stand at 1370°C for three hours. Then the temperature was lowered to 300°C at a rate of 100°C/hour. Then, the honeycomb fired body was placed at room temperature (25°C).

The surface of the honeycomb fired body is oxidized during the oxidation process. Specifically, an oxide layer is formed on the surfaces of the silicon carbide particles in the honeycomb fired body.

Hereinafter, the honeycomb fired body subjected to the oxidation process is referred to as "honeycomb fired body of Example 1".

(2) Evaluation of honeycomb fired body

The honeycomb fired body of Example 1 was evaluated for the following characteristics.

(2-1) Measurement of thickness of oxide layer by X-ray photoelectron spectroscopy (XPS)

The thickness of the oxide layer (nm) of the honeycomb fired body was measured by XPS.

A silicon carbide piece (2 cm $\times$ 2 cm $\times$ 0.25 mm) was cut out from the honeycomb fired body of Example 1 as a sample for XPS measurement. The surface other than the cut-out face of the sample for XPS measurement was observed.

Quantera SXM manufactured by ULVAC-PHI, Inc. was used as an XPS device, and monochromated Al-K$\alpha$ rays were used as an X-ray source. The measurement conditions included a voltage of 15 kV, an output of 25 W, and a measurement area of 100 $\mu$m$\phi$. Ion sputtering conditions included ionic species of Ar$^+$, a voltage of 1 kV, and a sputtering rate (SiO$_2$ conversion) of 1.5 nm/min.

Qualitative analysis (wide scanning) of the sample for XPS measurement and depth profile analysis with respect to C, O, and Si were performed using the XPS device. Based on the results of the depth profile analysis, the thickness of the oxide layer was calculated from the period of time of the strength, which is the middle of the highest strength and the lowest strength of SiO$_2$ profile, and from the sputtering rate (SiO$_2$ conversion) of the sample for XPS measurement.

The thickness of the oxide layer of Example 1 was 310 nm.

(2-2) Measurement of bending strength

The three-point bending test was performed on the honeycomb fired body of Example 1, and the bending strength (MPa) of the honeycomb fired body was measured.

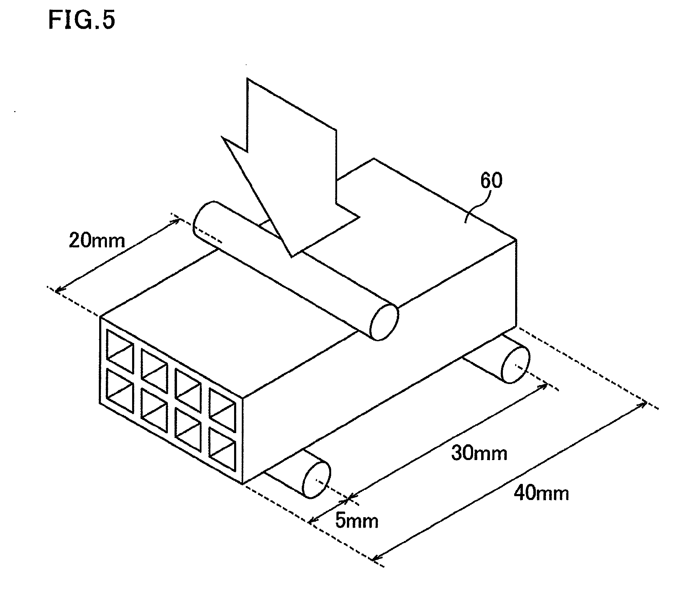

Fig. 5 is an explanatory view schematically illustrating a method of the three-point bending test.

First, ten silicon carbide pieces with a size of 2 cells $\times$ 4 cells $\times$ 40 mm excluding the peripheral wall and the sealed portions were cut out from the honeycomb fired body of Example 1 as samples for the three-point bending test.

Then, as illustrated in Fig. 5, a load was applied to the main surface (the larger surface of the periphery surfaces of the sample) of each sample 60 for the three-point bending test in the direction perpendicular to the main surface to measure a breaking load (load when the sample breaks). The ten samples for the three-point bending test were measured for a breaking load, and the average of the breaking loads was determined as a bending strength.

The three-point bending test was performed under the conditions of a span distance of 30 mm and a crosshead speed of 1 mm/min using INSTRON 5582 in accordance with JIS R 1601.

The bending strength in Example 1 was 27.9 MPa.

(2-3) Evaluation of wettability

The honeycomb fired body of Example 1 was evaluated for wettability by the following method.

The time it takes to change the contact angle between the oxide layer and a pendant droplet thereon from 40° to 20° (contact angle change time) was measured by the pendant drop method using the contact angle meter (produced by Kyowa Interface Science Co., Ltd., Drop Master 300, counting system: CCD camera).

A surfactant (produced by SAN NOPCO LIMITED, SN980, viscosity: 3700 cP, surface tension: 30.6 mN/m) was used as the pendant droplets.

The contact angle change time in Example 1 was 15.0 seconds.

(2-4) Determination of weight increase rate

A weight A of the honeycomb fired body before being subjected to the oxidation process in Example 1 and a weight B thereof after being subjected to the oxidation process in Example 1 were measured. The weight increase rate was determined from the following equation.

$$\texttt{Weight increase rate (\% by weight) = [(B-A)/A] \times 100}$$

The weight increase rate in Example 1 was 2.3% by weight.

(3) Manufacture of honeycomb filter

An aggregate of the honeycomb fired bodies was manufactured using 16 pieces of honeycomb fired bodies of Example 1 by applying an adhesive paste to the side faces of the honeycomb fired bodies. The 16 pieces of the honeycomb fired bodies (4 pieces in a transverse direction and 4 pieces in a longitudinal direction) were bonded to one another with the adhesive paste interposed therebetween.

Next, the adhesive paste was prepared which contains alumina fibers (30% by weight) having an average fiber length of 20 $\mu$m and an average fiber diameter of 2 $\mu$m, silicon carbide particles (21% by weight) having an average particle size of 0.6 $\mu$m, silica sol (15% by weight, solids content: 30% by weight), carboxymethyl cellulose (5.6% by weight), and water (28.4% by weight).

Further, the aggregate of the honeycomb fired bodies was heated at 120°C so that the adhesive paste was dried and solidified. In this manner, a rectangular pillar-shaped ceramic block was manufactured in which an adhesive layer having a thickness of 1.0 mm was formed.

Subsequently, the periphery of the ceramic block was cut with a diamond cutter, whereby a round pillar-shaped ceramic block having an outside diameter of 142 mm was manufactured.

Next, a peripheral coating material paste was applied to the peripheral face of the ceramic block whose outer periphery was formed into a round pillar shape to form a peripheral coating material paste layer. Then, the peripheral coating material paste layer was dried and solidified at 120°C to form a peripheral coat layer, and thereby a honeycomb filter that has a round pillar shape of 143.8 mm in diameter and 150 mm in length and is provided with the peripheral coat layer on the outer peripheral face thereof was manufactured.

The adhesive paste was used as the coating material paste.

(Comparative Example 1)

A honeycomb fired body was manufactured as in Example 1, except that no oxidation process was performed. Hereinafter, the honeycomb fired body is referred to as "honeycomb fired body of Comparative Example 1".

A honeycomb filter was manufactured using the honeycomb fired body of Comparative Example 1 as in Example 1.

The honeycomb fired body of Comparative Example 1 was evaluated for the characteristics as in Example 1.

The results were that the thickness of the oxide layer of Comparative Example 1 was smaller than 4 nm, the bending strength was 14.4 MPa, and the contact angle change time was 20.0 seconds. In addition, in Comparative Example 1, since no oxidation process was performed, the weight increase rate was expressed as 0% by weight.

The thicknesses of the oxide layers, the bending strengths, the contact angle change times, and the weight increase rates of Example 1 and Comparative Example 1 are all shown in Table 1.

[Table 1]

| | Thickness of oxide layer (nm) | Bending strength (MPa) | Contact angle change time (seconds) | Weight increase rate(% by weight) |
|---|---|---|---|---|
| Example 1 | 310 | 27.9 | 15.0 | 2.3 |
| Comparative Example 1 | <4 | 14.4 | 20.0 | 0 |

In Example 1, the oxide layer has a thickness of 310 nm, which indicates that the oxide layer is formed on the surfaces of the silicon carbide particles that form the honeycomb fired body.

In contrast, in Comparative Example 1 in which no oxidation process was performed, the oxide layer has a thickness of smaller than 4 nm, which indicates that an effective oxide layer was not formed on the surfaces of the silicon carbide particles.

The bending strength of the honeycomb fired body of Example 1 is higher than that of the honeycomb fired body of Comparative Example 1. This shows that the formation of an oxide on the surfaces of the silicon carbide particles that form the honeycomb fired body presumably improves the mechanical strength of the honeycomb fired body.

As well as being used as the indicator for evaluating the mechanical strength of the honeycomb fired body, the bending strength can also be used as the indicator for evaluating the resistance for thermal shock.

The thermal shock fracture resistance index R' is represented by the following equation (1).

[Equation 1]

$$R' = \frac{\sigma(1-\gamma)k}{\alpha E} \quad \cdots (1)$$

In the equation (1), $\sigma$ is bending strength, $\gamma$ is Poisson's ratio, k is thermal conductivity, $\alpha$ is coefficient of thermal expansion, and E is Young's modulus.

It is known that a larger thermal shock fracture resistance index R' indicates higher resistance to the thermal shock (see, for example, K. Ohno et al., "Further Durability Enhancement of Re-crystallized SiC-DPF", SAE technical paper: 2004-01-0954 and the like).

In addition, it is known that the presence or absence of the oxide layer does not change the Poisson's ratio $\gamma$, the thermal conductivity k, the coefficient of thermal expansion $\alpha$, and the Young' modulus E.

Therefore, when the Poisson's ratio $\gamma$, the thermal conductivity k, the coefficient of thermal expansion $\alpha$, the Young' modulus E are not changed, and the bending strength $\sigma$ is larger, the thermal shock fracture resistance index R' becomes larger. This indicates that the resistance to thermal shock is high.

As described above, the bending strength in Example 1 in which an oxide layer is formed is higher than that in Comparative Example 1 in which no oxide layer is formed.

Therefore, the resistance to thermal shock of the honeycomb fired body of Example 1 is presumably higher than that of the honeycomb fired body of Comparative Example 1.

Further, the contact angle change time of the honeycomb fired body of Example 1 is shorter than that of the honeycomb fired body of Comparative Example 1.

This shows that the formation of an oxide on the surfaces of the silicon carbide particles that form the honeycomb fired body presumably makes the surface of the honeycomb fired body smooth, and catalysts or the like are therefore easily supported on the honeycomb fired body.

(Other embodiments)

The honeycomb filter of the embodiment of the present invention may include a single piece of the honeycomb fired body made of silicon carbide. Such a honeycomb filter formed of a single piece of the honeycomb fired body is also referred to as an integral honeycomb filter.

The integral honeycomb filter exerts the same effects as the honeycomb filter of the first embodiment of the present invention.

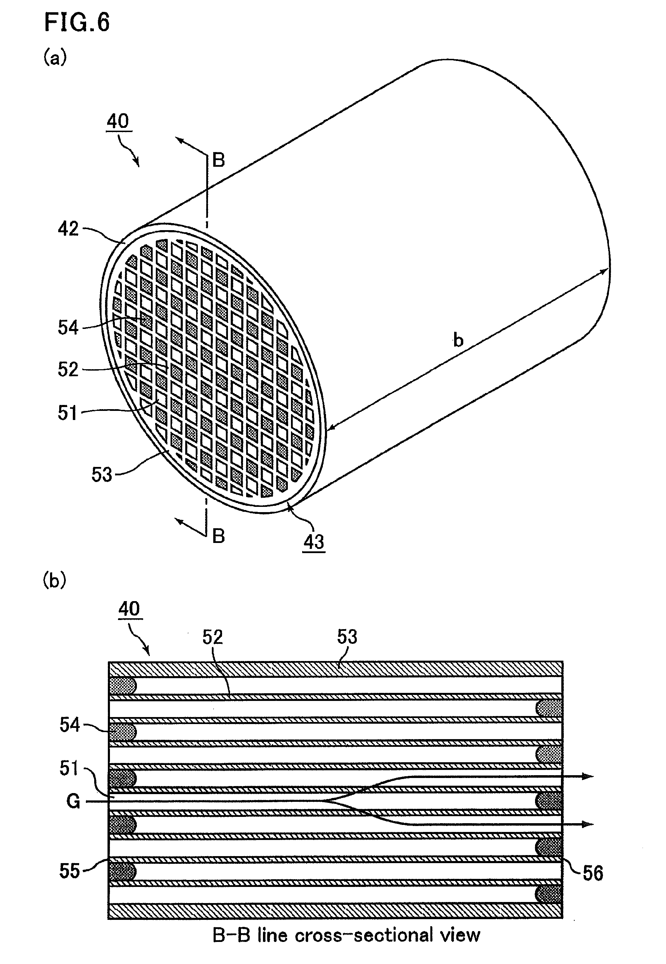

Fig. 6(a) is a perspective view schematically illustrating one example of a honeycomb filter of another embodiment of the present invention. Fig. 6(b) is a B-B line cross-sectional view of the honeycomb filter illustrated in Fig. 6(a).

A honeycomb filter 40 illustrated in Figs. 6(a) and 6(b) has a ceramic block 43 formed of a single round pillar-shaped honeycomb fired body. On the periphery of the ceramic block 43, a peripheral coat layer 42 is formed. The peripheral coat layer may be formed if needed.

In the honeycomb fired body that constitutes the honeycomb filter 40 illustrated in Figs. 6(a) and 6(b), a large number of cells 51 are longitudinally (direction of the arrow b in Fig. 6(a)) placed in parallel with one another with a cell wall 52 interposed therebetween. A peripheral wall 53 constitutes a periphery of the honeycomb fired body. The thickness of the peripheral wall 53 is larger than that of the cell wall 52.

In the honeycomb filter 40 illustrated in Figs. 6(a) and 6(b), either one end portion of each of the cells 51 is sealed with a plug 54.

Therefore, exhaust gas G (in Fig. 6(b), exhaust gas is indicated by G, and a flow thereof is indicated by arrows) which has flowed into the cells 51, each of which has an opening on one end face 55, surely passes through the cell wall 52 that partitions the cells 51, and flows out from the cells 51, each of which has an opening on the other end face 56. Thus, the cell wall 52 functions as a filter for capturing PMs and the like.

When the integral honeycomb filter is manufactured, a honeycomb molded body is manufactured in the same manner as in the first embodiment of the present invention, except that the honeycomb molded body, which is formed by extrusion-molding, is larger than the honeycomb molded body described in the first embodiment of the present invention, and has an outer shape different from that of the above-mentioned honeycomb molded body of the first embodiment.

Other processes are performed similarly to those for manufacturing the honeycomb filter of the first embodiment of the present invention. However, since the integral honeycomb filter is a honeycomb filter including one piece of the honeycomb fired body, it is not necessary to perform the bonding process. Moreover, a periphery cutting process is not needed for the integral honeycomb filter.

The honeycomb filter manufactured as described above may be subjected to the oxidation process (a process for forming an oxide layer on the surfaces of the silicon carbide particles of the honeycomb fired body) described in the first embodiment of the present invention before the peripheral coat layer forming process (that is, between the firing process and the peripheral coat layer forming process).

The oxidation process may be performed after the peripheral coat layer forming process. In cases where the periphery cutting process is performed, the oxidation process may be performed between the firing process and the periphery cutting process, or between the periphery cutting process and the peripheral coat layer forming process. In cases where no periphery cutting process is performed, the oxidation process may be performed between the firing process and the peripheral coat layer forming process. Further, the oxidation process may be performed on a honeycomb filter in which no peripheral coat layer is formed.

The shape of the honeycomb filter of the embodiment of the present invention is not particularly limited to a round pillar shape, and may be any desired pillar shape such as a cylindroid shape and a polygonal pillar shape.

In the honeycomb fired body that constitute the honeycomb filter of the embodiment of the present invention, either one end portion of each of the cells may be sealed, and sealed end portions of the cells are preferably alternately side to side.

The porosity of the honeycomb fired body that constitutes the honeycomb filter of the embodiment of the present invention is not particularly limited, and is preferably within the range of 30% to 50%.

When the porosity of the honeycomb fired body is within the range of 30% to 50%, the strength of the honeycomb fired body can be maintained, and the resistance caused by exhaust gas passing through the cell wall can be kept low.

If the porosity of the honeycomb fired body is less than 30%, particulate matters (PMs) may easily cause clogging in the honeycomb fired body. If the porosity of the honeycomb fired body is more than 50%, the strength of the honeycomb fired body may be lowered, leading to easy breakage.

The average pore size of the honeycomb fired body that constitutes the honeycomb filter of the embodiment of the present invention is preferably 5 to 30 $\mu$m.

If the average pore size of the honeycomb fired body is smaller than 5 $\mu$m, particulate matters may easily cause clogging in the honeycomb fired body. If the average pore size of the honeycomb fired body is larger than 30 μm, particulate matters may pass through the pores in the cell wall. In such a case, the honeycomb fired body fails to capture particulate matters, resulting in insufficient performance as a filter.

The porosity and the pore size may be measured, for example, by mercury porosimetry which is a conventionally known method.

The density of the cells in a cross section perpendicular to the longitudinal direction of the honeycomb fired body that constitutes the honeycomb filter of the embodiment of the present invention is not particularly limited. Preferably, the lower limit is 31.0 pcs/cm$^2$ (200 pcs/inch$^2$) and the upper limit is 93.0 pcs/cm$^2$ (600 pcs/inch$^2$). More preferably, the lower limit is 38.8

pcs/cm$^2$ (250 pcs/inch$^2$) and the upper limit is 77.5 pcs/cm$^2$ (500 pcs/inch$^2$).

In the honeycomb filter of the embodiment of the present invention, the shape of each of the cells in a cross section perpendicular to the longitudinal direction of the honeycomb fired body is not limited to a quadrangle, and may be any shape such as circular, elliptical, pentagonal, hexagonal, trapezoidal, and octagonal shapes. Moreover, various shapes may be employed in combination.

The bonding process in manufacture of the aggregated honeycomb filter may be performed by temporarily fixing honeycomb fired bodies in a mold having the substantially same shape as a ceramic block (or an aggregate of the honeycomb fired bodies) to be manufactured and injecting an adhesive paste to the gap between the honeycomb fired bodies, in addition to a method of applying an adhesive paste to side faces of each honeycomb fired body.

Upon manufacturing the aggregated honeycomb filter, a plurality of honeycomb fired bodies different in cross-sectional shape are manufactured, and a ceramic block is manufactured from a combination of the honeycomb fired bodies by combining the honeycomb fired bodies with an adhesive layer interposed therebetween. As a result, the periphery cutting process can be eliminated.

For example, the below described three kinds of honeycomb fired bodies different in cross-sectional shape may be manufactured. A first honeycomb fired body has a cross section surrounded by two lines and one arc. A second honeycomb fired body has a cross section surrounded by three lines and one arc. A third honeycomb fired body has a cross section surrounded by four lines (quadrangle). These three kinds of honeycomb fired bodies different in cross-sectional shape can be manufactured by changing the shape of a die to be used for the extrusion-molding. By using eight pieces of the first honeycomb fired bodies, four pieces of the second honeycomb fired bodies, and four pieces of the third honeycomb fired bodies in combination, a honeycomb filter with a round pillar shape can be manufactured.

Since the periphery cutting process does not need to be performed in the above described method, the oxide layer can be formed on the surfaces of the silicon carbide particles by performing the oxidation process after the bonding process. In this case, the heat treatment temperature during the oxidation process needs to be such a temperature as not to melt inorganic fibers contained in an adhesive layer.

In the honeycomb filter of the embodiment of the present invention, the organic binder contained in the wet mixture used for manufacturing the honeycomb fired body that constitutes the honeycomb filter is not particularly limited. Examples of the organic binder include methyl cellulose, carboxymethyl cellulose, hydroxyl ethyl cellulose, and polyethylene glycol. Among these, methyl cellulose is preferable. Commonly, the amount of the organic binder is preferably within the range of 1 to 10 parts by weight for each 100 parts by weight of ceramic powder.

The plasticizer contained in the wet mixture is not particularly limited, and examples thereof include glycerin.

The lubricant contained in the wet mixture is not particularly limited, and examples thereof include polyoxyalkylene compounds such as polyoxyethylene alkyl ether and polyoxypropylene alkyl ether.

Specific examples of the lubricant include polyoxyethylene monobutyl ether and polyoxypropylene monobutyl ether.

In some cases, a plasticizer and a lubricant may not be contained in the wet mixture.

In preparing the wet mixture, a dispersion medium may be used. Examples of the dispersion medium include water, organic solvents such as benzene, and alcohols such as methanol.

The wet mixture may further contain a molding aid.

The molding aid is not particularly limited, and examples thereof include ethylene glycol, dextrin, fatty acid, fatty acid soap, and polyalcohol.

The wet mixture may further contain a pore forming agent such as balloons that are micro hollow spheres containing oxide ceramics, spherical acrylic particles, and graphite, if needed.

The balloons are not particularly limited, and examples thereof include alumina balloons, glass micro balloons, shirasu balloons, fly ash balloons (FA balloons), and mullite balloons. Among these, alumina balloons are preferable.

Examples of the inorganic binder contained in the adhesive paste and the coating material paste include silica sol and alumina sol. Each of these may be used alone, or two or more kinds of these may be used in combination. Among the inorganic binders, silica sol is preferable.

Examples of the organic binder contained in the adhesive paste and the coating material paste include polyvinyl alcohol, methyl cellulose, ethyl cellulose, and carboxymethyl cellulose. Each of these may be used alone, or two or more kinds of these may be used in combination. Among the organic binders, carboxymethyl cellulose is preferable.

Examples of the inorganic fibers contained in the adhesive paste and the coating material paste include fibers of ceramics such as silica-alumina, mullite, alumina, and silica. Each of these may be used alone, or two or more kinds of these may be used in combination. Among the inorganic fibers, alumina fibers are preferable.

Examples of the inorganic particles contained in the adhesive paste and the coating material paste include carbide particles and nitride particles. Specific examples of the inorganic particles include silicon carbide particles, silicon nitride particles, and boron nitride particles. Each of these may be used alone, or two or more kinds of these may be used in combination. Among the inorganic particles, silicon carbide particles are preferable because of its excellent thermal conductivity.

The adhesive paste and the coating material paste may further contain a pore forming agent such as balloons that are micro hollow spheres containing oxide ceramics, spherical acrylic particles, and graphite, if needed. The balloons are not particularly limited, and examples thereof include alumina balloons, glass micro balloons, shirasu balloons, fly ash balloons (FA balloons), and mullite balloons. Among these, alumina balloons are preferable.

The honeycomb filter of the embodiment of the present invention further may contain a catalyst supported on the cell wall of the honeycomb fired body.

When a catalyst capable of purifying exhaust gas containing harmful gaseous components such as CO, HC, and NOx is supported on the cell wall of the honeycomb fired body, the exhaust gas containing harmful gaseous components can be sufficiently purified by the catalytic reaction. Further, PMs can be more easily burned and eliminated by supporting a catalyst that helps the burning of the PMs.

Examples of the catalyst to be supported include noble metals such as platinum, palladium, and rhodium.

For supporting a catalyst, the cell wall of the honeycomb fired body can have a catalyst supporting layer for higher dispersion of catalyst. The material of the catalyst supporting layer is desirably a material having a large specific surface area for supporting the catalyst in a highly dispersed manner. Examples of the material include oxides of ceramics such as alumina, titania, zirconia, ceria, and silica.

Each of these materials may be used alone, or two or more kinds of these may be used in combination.

With regard to the honeycomb filter of the present invention, the essential features are that either one end portion of each cell is sealed, the cell wall have a thickness of 0.2 mm or less, the peripheral wall have a thickness larger than the thickness of the cell wall, the silicon-containing oxide layer is formed on the surfaces of the silicon carbide particles which form the honeycomb fired body, and the honeycomb filter is used for capturing particulate matters in exhaust gas from a gasoline engine. With regard to the exhaust gas purifying apparatus and the method for purifying exhaust gas of the present invention, the essential feature is use of the honeycomb filter of the present invention.

By appropriately combining the various configurations described in the first embodiment and other embodiments of the present invention (for example, the configuration of the honeycomb fired body, configuration of the oxide layer, the conditions of the oxidation process, and the like) with the essential features, desired effects can be obtained.

REFERENCE SIGNS LIST

10, 40, 110 Honeycomb filter
11 Adhesive layer
12, 42 Peripheral coat layer
13, 43 Ceramic block
20 Honeycomb fired body
21, 51 Cell
22, 52 Cell wall
23, 53 Peripheral wall
24, 54 Plug
25 One end face of honeycomb fired body
26 The other end face of honeycomb fired body
31 Silicon carbide particles
31a Neck
32 Silicon-containing oxide layer
55 One end face of honeycomb filter
56 The other end face of honeycomb filter
60 Sample for three-point bending test
100 Exhaust gas purifying apparatus
120 Metal casing

121 Gas inlet side of metal casing
122 Gas outlet side of metal casing
130 Holding sealing material
G Exhaust gas

## Claims

1. A honeycomb filter comprising: a honeycomb fired body made of silicon carbide, the honeycomb fired body comprising a large number of cells longitudinally placed in parallel with one another with a cell wall interposed between the cells and having a peripheral wall constituting a periphery of the honeycomb fired body,
either one end portion of each of the cells being sealed,
the cell wall having a thickness of 0.2 mm or less,
the peripheral wall having a thickness larger than the thickness of the cell wall,
a silicon-containing oxide layer being formed on the surfaces of silicon carbide particles which form the honeycomb fired body,
the honeycomb filter being used for capturing particulate matters in exhaust gas from a gasoline engine.

2. The honeycomb filter according to claim 1,
wherein the oxide layer has a thickness within the range of 200 to 400 nm.

3. The honeycomb filter according to claim 1 or 2,
wherein the cell wall has a thickness within the range of 0.1 to 0.125 mm.

4. The honeycomb filter according to any one of claims 1 to 3,
wherein the thickness of the peripheral wall is 150% to 300% of the thickness of the cell wall.

5. The honeycomb filter according to any one of claims 1 to 4,
wherein the peripheral wall has a thickness within the range of 0.25 to 0.4 mm.

6. The honeycomb filter according to any one of claims 1 to 5 further comprising a catalyst supported on the cell wall of the honeycomb fired body.

7. The honeycomb filter according to any one of claims 1 to 6,
wherein the gasoline engine is a gasoline direct injection engine.

8. The honeycomb filter according to any one of claims 1 to 7 comprising a single piece of the honeycomb fired body.

9. The honeycomb filter according to any one of claims 1 to 7 comprising a plurality of the honeycomb fired bodies combined with an adhesive layer interposed therebetween.

10. An exhaust gas purifying apparatus comprising:

    a metal casing provided with a gas inlet side and a gas outlet side;
    a honeycomb filter housed in the metal casing; and
    a holding sealing material wound around the honeycomb filter and disposed between the metal casing and the honeycomb filter,
    the honeycomb filter being a honeycomb filter according to any one of claims 1 to 9.

11. A method for purifying exhaust gas comprising: purifying exhaust gas from a gasoline engine using an exhaust gas purifying apparatus,
the exhaust gas purifying apparatus comprising:
a metal casing provided with a gas inlet side and a gas outlet side;
a honeycomb filter housed in the metal casing; and
a holding sealing material wound around the honeycomb filter and disposed between the metal casing and the honeycomb filter,
the honeycomb filter being a honeycomb filter according to any one of claims 1 to 9,
the exhaust gas from a gasoline engine being flowed into the exhaust gas purifying apparatus from the gas inlet side of the metal casing and discharged from the gas outlet side of the metal casing.

FIG.1

<u>10</u>

11    20    <u>13</u>    12

# FIG.2

(a)

(b)

A-A line cross-sectional view

# FIG.3

(a)

(b)

FIG.4

FIG.5

20mm

60

30mm

40mm

5mm

## FIG.6

(a)

(b)

B-B line cross-sectional view

## INTERNATIONAL SEARCH REPORT

| | International application No. |
|---|---|
| | PCT/JP2012/062947 |

A. CLASSIFICATION OF SUBJECT MATTER
*B01D39/20*(2006.01)i, *B01D46/00*(2006.01)i, *C04B35/565*(2006.01)i, *F01N3/022* (2006.01)i

According to International Patent Classification (IPC) or to both national classification and IPC

B. FIELDS SEARCHED

Minimum documentation searched (classification system followed by classification symbols)
B01D39/20, B01D46/00, F01N3/022

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2008-238158 A (Ibiden Co., Ltd.), 09 October 2008 (09.10.2008), claims; paragraphs [0036], [0049], [0079], [0081]; fig. 1 to 6 (Family: none) | 1-11 |
| Y | JP 2000-218165 A (Ibiden Co., Ltd.), 08 August 2000 (08.08.2000), claim 1 (Family: none) | 1-11 |
| Y | JP 2011-139975 A (NGK Insulators, Ltd.), 21 July 2011 (21.07.2011), claim 1 & US 2011/0203242 A1 & EP 2343113 A1 | 3-11 |

| ☒ | Further documents are listed in the continuation of Box C. | ☐ | See patent family annex. |
|---|---|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 June, 2012 (06.06.12) | 19 June, 2012 (19.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/062947

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2002-172304 A (NGK Insulators, Ltd.), 18 June 2002 (18.06.2002), entire text; all drawings & WO 2002/026353 A1 & AU 8811201 A | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010221153 A
- JP 2010221154 A
- JP 2010221155 A
- JP 2011139975 A

**Non-patent literature cited in the description**

- **K. OHNO et al.** Further Durability Enhancement of Re-crystallized SiC-DPF. *SAE technical paper: 2004-01-0954,* 2004